## Europäisches Patentamt
## European Patent Office
## Office européen des brevets

(19)

(11) Publication number: **0 054 910**
**B1**

(12) # EUROPEAN PATENT SPECIFICATION

(45) Date of publication of patent specification: **28.08.85**

(21) Application number: **81110515.4**

(22) Date of filing: **17.12.81**

(51) Int. Cl.⁴: **C 03 C 25/02, C 03 B 37/08, C 25 D 11/08, D 01 D 4/02, D 01 D 11/06, D 06 B 3/04, G 02 B 6/16**

(54) Nozzles for manufacturing first coating of optical fibres, and method of manufacturing the nozzle.

(30) Priority: **19.12.80 IT 6894680**

(43) Date of publication of application:
**30.06.82 Bulletin 82/26**

(45) Publication of the grant of the patent:
**28.08.85 Bulletin 85/35**

(84) Designated Contracting States:
**BE DE FR GB NL SE**

(56) References cited:
**EP-A-0 021 677**
**CH-A- 167 487**
**GB-A-2 021 003**

**"ULLMANS ENCYKLOPÄDIE DER TECHNISCHEN CHEMIE", 4th edition, Vol. 12 1976, VERLAG CHEMIE, Weinheim, New York pages 196 to 197**

**"ALUMINIUM-TASCHENBUCH" 12th edition 1963, ALUMINIUM-VERLAG GMBH, Düsseldorf pages 558 to 564**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Roba, Giacomo**
**V. Allegro, 63/5**
**Cogoleto (GE) (IT)**

(74) Representative: **Riederer Freiherr von Paar zu Schönau, Anton**
**Freyung 615 Postfach 2664**
**D-8300 Landshut (DE)**

Courier Press, Leamington Spa, England.

EP 0 054 910 B1

## Description

The present invention relates to apparatus for the fabrication of optical fibres to be used as physical carriers in the telecommunications field and more particularly it concerns a nozzle for manufacturing the first coating of optical fibres, and a method of manufacturing the nozzle.

As known, the fabrication technique of optical fibres consists of a first step in which the fibre surface is protected by a thin resin layer; in fact the material the fibre is generally made of is silica glass, which presents at the same time considerable hardness and brittleness. Under these conditions the presence of dust or of surface imperfections can produce localized stresses, which, by causing micro-breakings in the fibre, degrade the fibre's mechanical characteristics.

This can be prevented by coating the fibre surface with a first resin layer. Resin, due to its lower coefficient of elasticity absorbs breaking stresses, allowing the fibre to be handled and stored without danger.

This coating is generally obtained by dipping the fibre in liquid resin, contained in a tank communicating at the bottom with a conical duct. The nozzle for the manufacturing of the first coating consists of the tank and the duct. The optical fibre, while being drawn, traverses the tank and emerges from the duct covered with the coating. The final operation is the drying or the polymerization of the resin.

The process success chiefly depends on the choice of the geometric parameters of the duct, such as minimum duct length, which determines the absence or presence of resin turbulence effects and consequently the constancy of coating thickness.

Another parameter on which the coating thickness depends is the diameter of the smaller ones of the apertures of the conical duct, i.e. the outlet thereof. This diameter has generally a value ranging from 150 to 300 µm but depends on the kind of used resin. Thin-film coatings (maximum thickness of 5 µm) are made of resins with a high coefficient of elasticity (e.g. 20 MPa), while thick-film coatings (thickness ranging from 20 to 40 µm) are made of lower coefficient resins (e.g. 2 MPa).

Finally the angle of convergency of the nozzle duct is important, as the concentricity between the fibre and the coating depends on it. A centering effect is obtained by radial forces originated from the sum of forces due to relative speed between fibre and duct walls and forces due to resin viscosity. The effect is null if the vertex angle is of 0° (cylindrical duct) or of 180°, while it produces the wanted results in an interval of values ranging from 2° to 8°.

The nozzle can be easily made of only one part, but in this case it is more difficult to use. In fact, the optical fibre has to be introduced into the nozzle duct in the initial drawing step, when its dimensions have not yet been exactly defined. This can cause fibre breaking and then the duct occlusion, as well as duct damages.

A nozzle divided into two equal parts, symmetrically with respect to the duct axial plane, can be an alternative. In this way the coating operation can be started once stationary conditions have been attained by closing the nozzle around the fibre and pouring resin into the tank.

An inconvenience encountered while manufacturing the coating resides in the nozzle wear in the duct. This is due to the abrasion produced by the fibre surface during drawing, in particular in the initial step when there is not yet resin in the tank and afterwards because the fibre vibrations are incompletely damped by the resin. As previously said, tolerances on the sizes and geometric profile of the duct are very strict. Hence the nozzle must be often replaced to maintain the fibre characteristics constant during the fabrication.

The use of materials harder than silica glass and with extremely smooth surfaces, such as ruby, corundum, tungsten carbide and the like, does not completely solve the problems presented by the nozzle fabrication: in fact their precision machining is very difficult, especially when a nozzle subdivided into two parts is required.

The problems in making the nozzles in question mainly reside in the small dimensions of the device and in the high precision requirements resulting from the qualifications made on optical fibres. In order to be able to insert the fibre into the nozzle, the division of the small device into two parts is necessary (as known per se, in a different and too rigid arrangement, from GB—A—2 021 003). Besides this, the nozzle is to present a very accurate conical shape which obviously is to be maintained during the drawing of the fibre, notwithstanding the abrasion due to the very hard silica material. Thus, the nozzle dimensions are very small, but also the permissible tolerance is small. Indeed, the problem encountered in the course of the fibre drawing and relating to the nozzle structure are very serious.

These disadvantages are overcome by the nozzle for manufacturing the first coating of optical fibres provided by the present invention, which is easy to make in two symmetrical parts with respect to a plane cutting the duct axis and presents a duct surface which is conveniently hard and smooth.

The subject of the invention is a nozzle for manufacturing the first coating of optical fibres according to a dipping technique, said nozzle consisting of a resin tank and a conical duct communicating with said tank and allowing the passage of an optical fibre during the drawing, the duct being divided into two parts symmetrical with respect to a plane containing the duct axis and capable of being approached to each other or being moved away from each other, which nozzle is characterized in that the nozzle consists of aluminium and at least the internal surface of said duct has been processed by an anodic oxidation process, the tank and the duct of the nozzle being divided into two parts which engage each other by counteracting springs, an adjusting screw and guiding gudgeons. A further subject of the invention is the method of manufacturing the nozzle, as characterized in claim 2. Thus, the invention proposes a material precisely suited to the machining and to the hardening of such a little zone. The internal surface of the duct can be prepared with the very small active area with sufficiently low tolerances. Though the material and its features are known per se ("ALUMINIUM-TASCHENBUCH" 12th edition 1963, ALUMINIUM-VERLAG GMBH, Düsseldorf, pages 558 to 564, * page 561, lines 15 to 45 *), the use thereof to fulfil the particular requirements of such nozzles is not obvious. In manufacturing the nozzle, according to claim 2, the anodic oxidation process has been optimized in order to obtain an oxide layer suited to the scope of the nozzle.

These and other characteristics of the present invention will be made clearer by the following description of a preferred embodiment thereof, given by way of example and not in a limiting sense, and illustrated in the annexed drawings in which:

— Fig. 1 is a perspective view of a typical nozzle;

— Fig. 2 is a front view of the nozzle part denoted by A in Fig. 1.

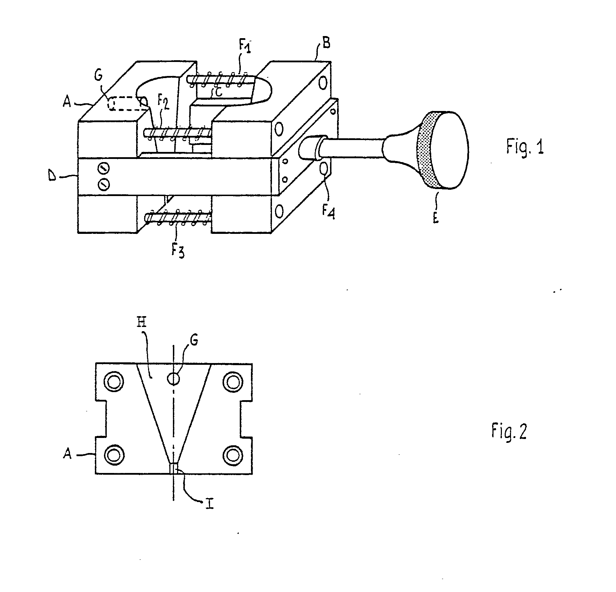

The nozzle represented in Fig. 1 consists of two parts A and B, the part B is movable between two supports C and D along the longitudinal direction thereof. By means of a screw E the part B, guided by four gudgeons $F_1$, $F_2$, $F_3$, $F_4$ can be pushed with extreme precision against part A, overcoming the force of counteracting springs wound around the gudgeons themselves.

In each part A, B a semiconical cavity H is obtained, ending, in correspondence with the vertex, with another semiconical cavity I having considerably smaller sizes. After approaching the two parts, the larger cavity acts as the tank, while the smaller one acts as the duct. For the nozzle fabrication first the two parts made of aluminium are manufactured without any cavity and are closed in the guide structure, then the mechanical machining of the duct and the tank is effected. Thus centering errors are avoided.

A side-hole G is also made in part A; through G the resin is poured by suitable pipes.

Other embodiments are possible, provided the duct is made of aluminium.

Fig. 2 shows in greater details the profile of the tank and the duct.

After nozzle machining, the hardening process is carried out by oxidizing the surface. Though the oxide layer has a negligible effect on workpiece mechanical characteristics (in fact this layer can be easily removed in case of impact, as it is supported by a softer material) yet it is almost as hard and abrasion-resistant as corundum.

For the use described here removal easiness is not a limitation as forces involved in drawing process are weak, of the order of $10^{-1}$ N. Besides, resin force is negligible, as it is not maintained under pressure.

Said oxide layer is obtained by an electrochemical process of anodic oxidation or of aluminium anodizing, optimized for the particular uses of the nozzle.

In fact, in order to make the layer more resistant to abrasion, it has to present a small number of small-sized pores.

That can be obtained through a convenient choice of the parameters involved in the electrochemical bath, such as electrolyte nature and concentration, temperature, voltage, current density, process duration.

Chromic acid and sulphuric acid are generally used as electrolytes.

By the use of chromic acid, the thickness of the layer and the number of pores are smaller than those obtained by use of sulphuric acid but the size of the pores is greater.

Hence the use of sulphuric acid, with a voltage of about 30 V, is more convenient. The nozzle, after its connecting to a voltage source, is introduced into the bath, which has to be thermostated and continuously stirred to remove gas bubbles on the electrodes. To compensate for the effect due to slight changes in temperature as well as in electrolyte concentration and composition, the applied voltage must be adjusted in order to obtain a constant current density.

Process duration is also important, as thickness layer is proportional to the nozzle residence time in the electrolytic solution. Besides, the porosity of the first generated oxide, the most external one, depends on the contact duration with the electrolyte, therefore a suitable value of compromise among these contrasting requirements must be determined. Finally, the size and number of pores are inversely proportional to the applied voltage.

The following operative conditions may be considered particularly advantageous:
— electrolyte: $H_2SO_4$;
— concentration: 12 to 20% in weight;
— bath temperature: −5 to +5°C;
— voltage: 20 to 40 V;
— current density: 12 to 16 mA/cm$^2$;
— process duration: 20' to 30'.

Once oxidation process is over, the pores must be water-sealed in order to avoid impurity absorption. That is obtained by immediately immerging the workpiece still connected to the voltage source into high-temperature deionized water for about 15' and keeping the pH to 6,5 values.

The above description has been given by way of example and not in a limiting sense. Variations and modifications could be made while remaining within the scope of the invention.

**Claims**

1. Nozzle for manufacturing the first coating of optical fibres according to a dipping technique, said nozzle consisting of a resin tank and a conical duct communicating with said tank and allowing the passage of an optical fibre during the drawing, the duct being divided into two parts (A, B) symmetrical with respect to a plane containing the duct axis and capable of being approached to each other or being moved away from each other, characterized in that the nozzle consists of aluminium and at least the internal surface of said duct has been processed by an anodic oxidation process, the tank and the duct of the nozzle being divided into two parts (A, B) which engage each other by counteracting springs, an adjusting screw (E) and guiding gudgeons ($F_1$, $F_2$, $F_3$, $F_4$).

2. Method of manufacturing the nozzle of claim 1, characterized in that said anodic oxidation process is made in electrochemical bath using sulphuric acid as an electrolyte and operating with the following parameters:
— concentration: 12 to 20% in weight;
— bath temperature: −5 to +5°C;
— voltage: 20 to 40 V;
— current density: 12 to 16 mA/cm$^2$;
— process duration: 20′ to 30′.

## Patentansprüche

1. Düse zum Herstellen der ersten Beschichtung optischer Fasern gemäß einer Tauchtechnik, wobei die Düse aus einem Harztank und einem mit dem Tank kommunizierenden konischen Kanal besteht, der den Durchtritt einer optischen Faser während des Ziehens ermöglicht und der in zwei Teile (A, B) unterteilt ist, die hinsichtlich einer die Kanalachse enthaltenden Ebene symmetrisch sind und die einander annäherbar oder voneinander wegbewegbar sind, dadurch gekennzeichnet, daß die Düse aus Aluminium besteht und wenigstens die Innenfläche des Kanals durch einen anodischen Oxidationsprozeß bearbeitet worden ist, und der Tank und der Kanal der Düse in zwei Teile (A, B) geteilt sind, die über auseinanderspreizende Federn, eine Justierschraube und Führungszapfen ($F_1$, $F_2$, $F_3$, $F_4$) aneinander angreifen.

2. Verfahren zum Herstellen der Düse nach Anspruch 1, dadurch gekennzeichnet, daß der anodische Oxidationsprozeß in einem elektrochemischen Bad unter Verwendung von Schwefelsäure als Elektrolyt durchgeführt, wobei mit den folgenden Parametern gearbeitet wird:
— Konzentration: 12 bis 20 Gewichts-%;
— Badtemperatur: −5 bis +5°C;
— Spannung: 20 bis 40 V;
— Stromdichte: 10 bis 16 mA/cm$^2$;
— Verfahrensdauer: 20 bis 30 Minuten.

## Revendications

1. Buse pour réaliser le premier revêtement des fibres optiques suivant la méthode d'immersion, cette buse étant constituée par un réservoir de résine et par un conduit conique communiquant avec ledit réservoir et apte à permettre le passage d'une fibre optique dans la phase de fibrage, ce conduit étant subdivisé en deux parties (A, B), symétriques par rapport à un plan qui comprend l'axe du conduit et aptes à être réciproquement approchées ou éloignées, caractérisée en ce que la buse est en aluminium et au moins la paroi interne dudit conduit est soumise à un procédé d'oxydation anodique, le réservoir et le conduit de la buse étant subdivisés en deux parties (A, B), qui s'engagent l'un dans l'autre, à l'aide de ressorts antagonistes, d'une vis de réglage (E) et des tiges de guidage ($F_1$, $F_2$, $F_3$, $F_4$).

2. Méthode pour réaliser la buse suivant la revendication 1, caractérisée en ce que ledit procédé d'oxydation anodique est effectué dans un bain électrochimique employant l'acide sulfurique comme électrolyte et opérant avec les paramètres suivants:
— concentration: 12 à 20% en poids;
— température du bain: −5 à +5°C;
— voltage: 20 à 40 V;
— densité du courant: 12 à 16 mA/cm$^2$;
— temps: 20 à 30 mn.

Fig. 1

Fig. 2